# EUROPÄISCHE PATENTSCHRIFT

(11) **EP 1 424 167 B1**
(45) Veröffentlichungstag und Bekanntmachung des Hinweises auf die Patenterteilung: **07.03.2012**
(21) Anmeldenummer: 03024571.6
(22) Anmeldetag: 28.10.2003
(51) Int. Cl.: B25B 23/14

(54) **Verfahren zum Verschrauben von Gewindeelementen mit inhomogene Bauteilen**
Method for the screwing of threaded elements into non-homogeneous materials
Procédé de vissage d'éléments filetés dans d.es pièces en materiau non-homogène

(30) Priorität: 27.11.2002 DE 10255177
(43) Veröffentlichungstag der Anmeldung: 02.06.2004
(73) Patentinhaber: Bayerische Motoren Werke Aktiengesellschaft, 80809 München (DE)
(72) Erfinder: Sigl, Klaus-Peter, Dr., 84028 Landshut (DE); Reisch, Thomas, 85354 Freising (DE)

(56) Entgegenhaltungen:
- DE-A1- 4 024 577
- DE-A1- 4 214 354
- DE-A1- 19 736 547
- DE-A1- 19 804 468
- DE-A1- 19 856 329
- US-A- 5 549 169
- US-A- 5 591 919
- "SELBSTFURCHENDE SCHRAUBEN KONTROLLIERT ANZIEHEN" BETRIEBSTECHNIK, TECHNISCHER VERLAG RESCH KG. GRAEFELFING, DE, Bd. 38, Nr. 12, 17. Dezember 1997 (1997-12-17), Seite 30, XP000730294 ISSN: 0409-2791

## Beschreibung

Die Erfindung betrifft ein Verfahren zum Verschrauben eines eine Auflagefläche aufweisenden, selbstschneidenden oder selbstfurchenden Gewindeelementes mit einem werkstoffmäßig inhomogenen Bauteil mittels eines den Verschraubungsvorgang nach dem Aufsetzen der Auflagefläche des Gewindeelementes bei einem einstellbaren Anzugsmoment beendenden Schraubers, sowie ein mit entsprechend verschraubten Gewindeelementen versehenes Bauteil. Als nächstliegender Stand der Technik wird das Dokument DE 19 856 329 A1 betrachtet.

Aus der DE 40 24 577 C 2 ist ein Verfahren zur Steuerung eines Schraubers bekannt, mittels welchem die Vorspannkraft einer Schraubverbindung exakt einstellbar ist. Hierbei wird eine Schraube zuerst bis zum Aufsetzen des Schraubenkopfes in die vorgeschnittene Gewindebohrung eines Bauteiles eingeschraubt, anschließend in einem ersten Schritt bis zu einem unterhalb des gewollten Endstadiums liegenden Zustand angezogen und in einem zweiten Schritt um einen gewissen Betrag wieder gelöst. In einem dritten Schritt wird aus den während des ersten und zweiten Schrittes erfassten und gespeicherten Messwerten des Anzugs- bzw. Lösemomentes sowie aus der Gewindesteigung der Schraubverbindung und der gewünschten Vorspannkraft ein zur Einstellung des Endstadiums erforderliches Anzugsmoment errechnet. Hierbei wird vorausgesetzt, dass sich der Schraubvorgang während der Messphasen im Hookschen Bereich der Schraubkurve bei konstanten Reibverhältnissen bzgl. Links- und Rechtslauf abspielt. Das bekannte Verfahren geht also von konstanten Materialverhältnissen aus, wobei die Festigkeit der ineinander verschraubten Gewindeteile annähernd gleich und die Belastbarkeit der Schraubverbindung in Bezug auf die Festigkeit des Schraubelementes hoch ist.

Aus der DE 41 28 427 C 2 ist ebenfalls ein Verfahren zur Steuerung eines Schraubers bekannt, mittels welchem der Schrauber in einer ersten Betriebsphase mit hoher Drehzahl läuft und kurz vor dem Aufsitzpunkt der Schraubverbindung in eine zweite Betriebsphase umgeschaltet wird, in welcher ein fest vorgegebenes Anzugsmoment eingestellt und der Schraubvorgang nach Erreichen dieses Wertes beendet wird. Auch hier wird von konstanten Material- und Festigkeitsverhättnissen der miteinander verschraubten Teile ausgegangen.

Bei einem Bauteil, das aus einem inhomogenen Material besteht, also zum Beispiel aus Schaumstoff, welcher eventuell noch mit Faserwerkstoffen zur Festigkeitserhöhung versehen sein kann, und in welches beispielsweise zur Befestigung eines weiteren Bauteiles ein selbstschneidendes oder -furchendes Gewindeelement direkt eingeschraubt werden soll, sind die oben genannten bekannten Verfahren aufgrund der stark schwankenden Material- und Festigkeitseigenschaften nicht anwendbar. Die Verwendung eines elektrisch oder pneumatisch angetriebenen Schraubers mit einem fest eingestellten Anzugs- bzw. Abschaltdrehmoment würde hier zu erheblichen Problemen führen, da aufgrund der ungleichmäßigen Schaumausbildung bzw. Faserverteilung in dem zu verschraubenden Bauteil unterschiedliche Eindrehwiderstände auftreten. Im Falle einer hochfesten Matrix wird die Schraube eventuell nur unvollständig eingedreht, wohingegen im Falle einer niedrigfesten Matrix schon geringe Drehmomente ausreichen, um die Verschraubung zu überdrehen. Somit wäre keine prozesssichere Verschraubung mit geringen Fehlerquoten realisierbar.

Es besteht also bei der vorliegenden Erfindung die Aufgabe, für jede einzelne Schraubverbindung entsprechend der jeweiligen lokalen Materialbeschaffenheit an der Einschraubstelle des Bauteils ein möglichst hohes Endanzugsmoment zu gewährleisten, wobei jedoch unbedingt ein Überdrehen der Schraubverbindung vermieden werden muss.

Diese Aufgabe wird erfindungsgemäß durch ein Verfahren mit den Merkmalen des Patentanspruchs 1 und durch ein Bauteil gemäß Anspruch 10 gelöst.

Erfindungsgemäß wird ein Einschraubmoment des Gewindeelementes während des Einschraubvorganges, welches zur Überwindung des Eindrehwiderstandes während des Schneidens oder Furchens erforderlich ist, ermittelt und daraus ein Endanzugsmoment zur Steuerung des Schraubers errechnet, mit dem dann das Gewindeelement in der Anzugsphase, also nach Erreichen des Aufsitzpunktes seiner Auflagefläche, angezogen wird. Es hat sich gezeigt, dass der Verlauf des Einschraubmomentes in Abhängigkeit vom Drehwinkel und damit der Einschraublänge in einer für die lokale Materialbeschaffenheit charakteristischen Weise ansteigt. Bei einer geringen lokalen Festigkeit des Bauteiles verläuft der Anstieg des Einschraubmomentes in Abhängigkeit vom Drehwinkel bzw. der Einschraublänge deutlich flacher und bei niedrigeren Werten als bei einem Material mit hoher mechanischer Festigkeit. Im Aufsitzpunkt des Gewindeelementes erreicht das Einschraubmoment einen für die Einschraubphase charakteristischen, materialspezifischen Maximalwert. Bei einem Weiterdrehen des Gewindeelementes, also in der Anzugsphase, steigt dann der Eindrehwiderstand steil an, bis er bei einem ebenfalls charakteristischen, materialspezifischen Überdrehmoment ein absolutes Maximum erreicht und danach aufgrund der zunehmenden Zerstörung des Gewindes steil abfällt. Da zwischen den maximalen Werten des Einschraubmomentes der Einschraubphase und des Überdrehmomentes der Anzugsphase auch bei den inhomogenen Materialien ein hinreichend großer Abstand besteht, kann schon aus einem bei einer bestimmten Einschraublänge gemessenen Einschraubmoment mit hinreichender Sicherheit auf ein optimales, das Überdrehmoment nicht überschreitendes Anzugsmoment geschlossen werden.

Es ist dabei vorteilhaft, das Einschraubmoment nach Erreichen eines vorgegebenen Drehwinkels des Gewindeelementes ab Einschraubbeginn oder einer vorgegebenen Einschraublänge zu ermitteln. Die vorgegebene Einschraublänge kann dabei in bekannter Weise entweder durch eine Abstandsmessung des Schraubers von dem Bauteil oder durch eine Drehwinkelmessung des Gewindeelementes nach Einschraubbeginn bei vorbekannter Gewindesteigung ermittelt werden. Dabei ist es besonders vorteilhaft, den Einschraubbeginn durch Überschreiten eines vorgegebenen Einschraubschwellmomentes festzulegen. Sollte dieses Einschraubschwellmoment nach einem vorgegebenen Drehwinkel oder einer vorgegebenen Einschraublänge des Gewindeelementes nicht erreicht werden, so kann davon ausgegangen werden, dass an dieser Stelle keine dauerhafte Befestigung möglich ist. Der Verschraubungsvorgang kann dann unter Abgabe einer Fehlermeldung abgebrochen werden.

Aus dem bei einer bestimmten Einschraublänge gemessenen Einschraubmoment und der sich aus der Gesamteinschraublänge ergebenden, bis zum Aufsitzpunkt verbleibenden Einschraublänge, lässt sich dann ein maximales Einschraubmoment errechnen. Das gemessene oder das errechnete maximale Einschraubmoment kann dann beispielsweise mit tabellarisch für unterschiedliche Einschraubmomente oder -momentenbereiche vorgegebenen, empirisch ermittelten Endanzugswerten verglichen und der Schrauber auf den jeweils zugeordneten Wert eingestellt werden. Alternativ kann das Endanzugsmoment auch durch eine vorgegebene prozentuale oder Festwert-Erhöhung des gemessenen oder des errechneten maximalen Einschraubmomentes festgesetzt werden.

Bei den in Frage kommenden, oben erwähnten Materialien ist es von Vorteil, wenn das Bauteil an der Befestigungsstelle mindestens ein vorgeformtes oder vorgebohrtes Loch für das selbstschneidende oder selbstfurchende Gewindeelement aufweist. Bei einem Bauteil aus einem inhomogenen Werkstoff, an welchem an mindestens einer Befestigungsstelle mindestens ein weiteres Bauteil mittels mindestens eines selbstschneidenden oder -furchenden Gewindeelementes befestigt werden soll, ist es von besonderem Vorteil, wenn pro Befestigungsstelle mindestens zwei voneinander beabstandete Einschraubstellen für ein Gewindeelement vorhanden sind. Für den Fall, dass aufgrund zu starker Inhomogenitäten an einer dieser Einschraubstellen das Gewindeelement nicht halten würde, kann dann im Wege einer Nachbearbeitung an der anderen Einschraubstelle ein erneuter Befestigungsversuch vorgenommen werden.

Die Erfindung wird im folgenden anhand der Figuren beispielsweise näher beschrieben. Es zeigen in stark schematisierter Darstellung:
- **Fig. 1a**: ein Verschraubungsdiagramm für ein Material mit geringer mechanischer Festigkeit;
- **Fig. 1b**: ein Verschraubungsdiagramm für ein Material mit hoher mechanischer Festigkeit; und
- **Fig. 2**: die Verschraubung zweier Bauteile mittels einer selbstfurchenden Schraube.

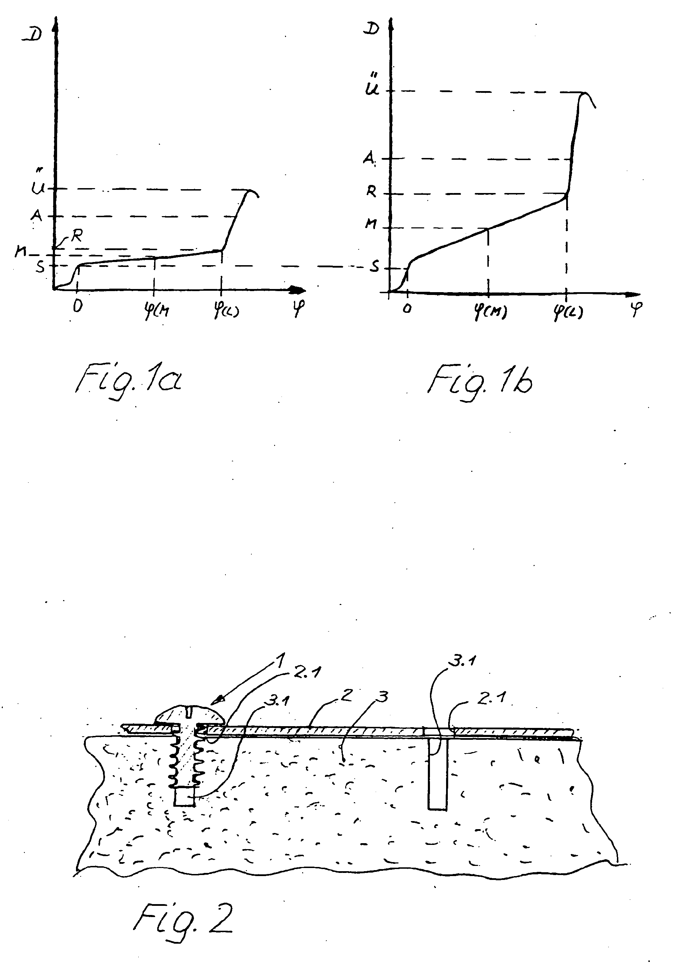

Bei dem in Figur 1a dargestellten Verschraubungsdiagramm wird eine selbstfurchende Schraube in ein Bauteil aus mit Fasern verstärktem Schaumstoff eingedreht und dabei das jeweils erforderliche Drehmoment D in Abhängigkeit vom Eindrehwinkel ϕ gemessen. Wie aus dem Diagramm zu sehen ist, steigt das Drehmoment in dem Moment an, in dem die Schraube gegriffen hat und sich bei einem als Einschraubphase bezeichneten Weiterdrehen die Gewindegänge im Bauteilmaterial selbst furcht. Hierbei wird ein Schwellwert S überschritten, wobei die zugehörige Winkelposition der Schraube zur Festlegung des Einschraubbeginns auf den Wert ϕ = 0 gesetzt wird. Während der Einschraubphase steigt das Drehmoment in ein für die lokale Materialbeschaffenheit des Bauteiles charakteristischen Weise an und erreicht bei einem der Schraubenlänge entsprechenden Drehwinkel ϕ(L) einen Maximalwert R. In diesem Moment setzt der Schraubenkopf mit seiner Auflagefläche auf und es beginnt die Anzugsphase, in welcher die Drehmomentkurve steil ansteigt, bis sie im sogenannten Überdrehmoment Ü ein Maximum erreicht und dann steil abfällt, wobei schließlich die Gewindegänge des Bauteiles herausgerissen werden.

Die Figur 1b zeigt den Drehmomentverlauf beim Einschrauben der gleichen Schraube wie in Figur 1a in ein Bauteil, dessen Grundmaterial demjenigen in Figur 1a entspricht, jedoch z. B. aufgrund starker Inhomogenitäten an der Einschraubstelle eine hohe mechanische Festigkeit aufweist. Hierbei wird bereits zu Beginn der Einschraubphase der Schwellwert S weiter als in Figur 1a überschritten und auch der Anstieg (Gradient) der Drehmomentkurve verläuft steiler, so dass am Ende der Einschraubphase bei dem zugehörigen Drehwinkel ϕ(L) auch ein höheres maximales Einschraubmoment R erreicht wird. Der dann folgende Anstieg der Drehmomentkurve ist ebenfalls größer; gleichfalls das erreichte Überdrehmoment Ü.

Für das erfindungsgemäße Verfahren kommt nun ein an sich bekannter, elekronisch gesteuerter und frei programmierbarer Schrauber mit Drehmoment- und Drehwinkelübertragung zur Anwendung, wie er beispielsweise in der vorgenannten DE 40 24 577 C 2 beschrieben wird und mit welchem eine Schraubverbindung gemäß Figur 2 hergestellt werden soll.

Hierzu wird eine selbstfurchende Schraube 1 verwendet, die mit Hilfe des Schraubers durch eine Bohrung 2.1 eines Bleches 2 in ein Sackloch 3.1 eines Bauteiles 3 aus einem stark inhomogenen, geschäumten und mit Fasern verstärkten Material zur Befestigung des Bleches 2 an dem Bauteil 3 eingeschraubt wird. In der elektronischen Steuerung des Schraubers ist der empirisch ermittelte Schwellwert S gespeichert, ebenso ein Drehwinkel ϕ(M), bis zu welchem die Schraube nach Überschreiten des Schwellwertes S und Festsetzen des Drehwinkels ϕ = 0 drehwinkelgesteuert eingeschraubt wird. Dieser Drehwinkel ϕ(M) sollte aus Toleranzgründen etwas kleiner als der der Gewindelänge der Schraube 1 entsprechende Drehwinkel ϕ(L) gewählt werden, damit das Aufsetzen des Schraubenkopfes den nachfolgenden Messvorgang nicht beeinflusst. Bei diesem Drehwinkel ϕ(M) wird das Einschraubmoment M gemessen und gespeichert und mit tabellarisch gespeicherten, jeweils für unterschiedliche Einschraubmomente oder -momentenbereiche empirisch vorermittelten Endanzugswerten korreliert und der Schrauber auf den entsprechenden Endanzugswert A eingestellt.

Eine noch genauere Festlegung des optimalen Endanzugsmomentes A lässt sich dadurch erzielen, dass während der Einschraubphase der Gradient des Einschraubmomentes gemessen und daraus ein maximales Einschraubmoment R für das vollständig eingeschraubte Gewinde der Schraube 1 bei dem Drehwinkel ϕ(L) errechnet wird. In vielen Fällen genügt es aber auch, wenn unmittelbar aus dem Einschraubmoment M durch Multiplikation mit einem empirisch ermittelten, vorgegebenen Faktor oder durch Addition eines Festwertes das Endanzugsmoment A errechnet wird, da, wie aus den Fig. 1a bzw. 1b zu ersehen ist, der für die Festlegung eines das Überdrehmoment Ü nicht überschreitenden Endanzugsmomentes A zur Verfügung stehende Abstand zwischen den Werten Ü und M stets relativ groß ist.

Der Schrauber wird nunmehr auf Drehmomentensteuerung umgeschaltet und die Schraube 1 bis zum Erreichen des nach den jeweiligen Methoden ermittelten Endanzugsmomentes A weitergedreht.

Sollte zu Beginn der Einschraubphase, zum Beispiel aufgrund ungleichmäßiger Schaumausbildung im Bauteilmaterial, der Schwellwert S nicht erreicht werden, so wird der Einschraubvorgang abgebrochen und eine entsprechende Fehlermeldung ausgegeben. Es ist von Vorteil, wenn dann für eine Befestigungsstelle, wie in Figur 2 gezeigt, mehrere Einschraubstellen 3.1 zur Verfügung stehen, so dass an einer noch freien Stelle ein weiterer Befestigungsversuch vorgenommen werden kann.

Ein Charakteristikum eines mit mehreren Schraubverbindungen versehenen und nach dem erfindungsgemäßen Verfahren verschraubten Bauteils besteht darin, dass jedes Schraubelement mit einem individuellen, der lokalen Festigkeit des Bauteilmaterials entsprechenden Endanzugsmoment A festgedreht ist.

## Patentansprüche

1. Verfahren zum Verschrauben eines eine Auflagefläche aufweisenden, selbstschneidenden oder selbstfurchenden Gewindeelementes (1) mit einem werkstoffmäßig inhomogenen Bauteil (3) mittels eines den Verschraubungsvorgang nach dem Aufsetzen der Auflagefläche des Gewindeelementes beendenden Schraubers, dessen Endanzugsmoment (A) aus einem in der Einschraubphase vor Erreichen des Aufsitzpunktes der Auflagefläche des Gewindeelementes ermittelten Einschraubmoment (M; R) errechnet wird, **dadurch gekennzeichnet,**
**dass** der Beginn der Einschraubphase (ϕ = 0) durch Überschreiten eines vorgegebenen Einschraubschwellmoments (S) festgelegt wird.

2. Verfahren nach Anspruch 1, **dadurch gekennzeichnet, dass**
das Einschraubmoment (M; R) nach Erreichen eines vorgegebenen Drehwinkels (ϕ_{(M)}; ϕ_{(L)}) des Gewindeelementes ab Einschraubbeginn (ϕ = 0) ermittelt wird.

3. Verfahren nach Anspruch 1, **dadurch gekennzeichnet, dass**
das Einschraubmoment (M; R) nach Erreichen einer vorgegebenen Einschraublänge ab Einschraubbeginn (ϕ = 0) ermittelt wird.

4. Verfahren nach Anspruch 3, **dadurch gekennzeichnet, dass**
die vorgegebene Einschraublänge zur Ermittelung des Einschraubmomentes (M, R) durch eine Abstandsmessung des Schraubers von dem Bauteil nach Einschraubbeginn (ϕ = 0) eingestellt wird.

5. Verfahren nach Anspruch 3, **dadurch gekennzeichnet, dass**
die vorgegebene Einschraublänge zur Ermittelung des Einschraubmomentes (M; R) durch eine Drehwinkelmessung des Gewindeelementes nach Einschraubbeginn (ϕ = 0) unter Berücksichtigung der Gewindesteigung eingestellt wird.

6. Verfahren nach einem der Ansprüche 1 bis 5, **dadurch gekennzeichnet, dass**
aus dem bei einer vorgegebenen Einschraublänge gemessenen Einschraubmoment (M) und der Gesamteinschraublänge des Gewindeelementes ein maximales Einschraubmoment (R) errechnet wird.

7. Verfahren nach einem der vorhergehenden Ansprüche, **dadurch gekennzeichnet, dass**
der Verschraubungsvorgang dann abgebrochen und eine Fehlermeldung erzeugt wird, wenn das Einschraubschwellmoment (S) nach einem vorgegebenen Drehwinkel oder einer vorgegebenen Einschraublänge des Gewindeelementes nicht erreicht wird.

8. Verfahren nach einem der Ansprüche 1 bis 7, **dadurch gekennzeichnet, dass**
das gemessene oder das errechnete maximale Einschraubmoment (M; R) mit vorgegebenen, jeweils empirisch für unterschiedliche Einschraubmomente oder -momentenbereiche ermittelten Endanzugswerten korreliert und das Endanzugsmoment (A) des Schraubers auf den jeweils entsprechenden Endanzugswert eingestellt wird.

9. Verfahren nach einem der Ansprüche 1 bis 7, **dadurch gekennzeichnet, dass**
das Endanzugsmoment (A) des Schraubers durch eine vorgegebene prozentuale oder Festwert-Erhöhung des gemessenen oder des errechneten maximalen Einschraubmomentes (M; R) festgelegt wird.

10. Verwendung eines Bauteils aus einem inhomogenen Material mit mindestens einem verschraubten, selbstschneidenden oder -furchenden Gewindeelement (1), bei dem das Gewindeelement (1) im jeweiligen Aufsitzpunkt mit einem nach Überschreiten eines als Beginn der Einschraubphase vorgegebenen Einschraubschwellmomentes (S) ermittelten Endanzugsmoment (A) angezogen ist.

11. Verwendung nach Anspruch 10, wobei das Bauteil aus einem Schaumwerkstoff (3) mit mindestens einem vorgeformten oder vorgebohrten Loch (3.1) für mindestens ein selbstschneidendes oder selbstfurchendes Gewindeelement (1) besteht.

12. Verwendung eines Bauteils nach Anspruch 10 oder 11, an dessen mindestens einer Befestigungsstelle mindestens ein weiteres Bauteil mittels mindestens eines selbstschneidenden oder selbstfurchenden Gewindeelementes befestigt ist, wobei pro Befestigungsstelle mindestens zwei voneinander beabstandete Einschraubstellen (2.1, 3.1) für ein Gewindeelement (1) vorhanden sind.

## Claims

1. A method for screwing a self-cutting or self-tapping threaded element (1) having a bearing surface to a component (3), which is non-homogeneous in terms of material, by means of a power screwdriver, which ends the screwing process after the bearing surface of the threaded element has been placed and the final tightening torque (A) of which is calculated from a screw-in torque (M; R) determined in the screw-in phase before the resting point of the bearing surface of the threaded element has been reached, **characterised in that**
the beginning of the screw-phase (ϕ = 0) is established by exceeding a predetermined screw-in threshold torque (S).

2. A method according to claim 1, **characterised in that**
the screw-in torque (M; R) is determined on reaching a predetermined angle (ϕ_{(M)}; ϕ_{(L)}) of rotation of the threaded element from the beginning of the screw-in operation (ϕ = 0).

3. A method according to claim 1, **characterised in that**
the screw-in torque (M; R) is determined on reaching a predetermined screw-in length from the beginning of the screw-in operation (ϕ = 0).

4. A method according to claim 3, **characterised in that**
the predetermined screw-in length is set to determine the screw-in torque (M; R) by a distance measurement of the power screwdriver from the component after the beginning of screw-in operation (ϕ = 0).

5. A method according to claim 3, **characterised in that**
the predetermined screw-in length is set to determine the screw-in torque (M; R) by a measurement of the angle of rotation of the threaded element after the beginning of the screw-in operation (ϕ = 0), taking into account the thread pitch.

6. A method according to any one of claims 1 to 5,
**characterised in that**
a maximum screw-in torque (R) is calculated from the screw-in torque (M) measured at a predetermined screw-in length and the total screw-in length of the threaded element.

7. A method according to any one of the preceding claims,
**characterised in that**
the screwing process is stopped and a fault message is generated when the screw-in threshold torque (S) has not been reached after a predetermined angle of rotation or a predetermined screw-in length of the threaded element.

8. A method according to any one of claims 1 to 7,
**characterised in that**
the measured or calculated maximum screw-in torque (M; R) is correlated with predetermined final tightening values determined empirically in each case for different screw-in torques or torque ranges and the final tightening torque (A) of the power screwdriver is set to the respective corresponding final tightening value.

9. A method according to any one of claims 1 to 7,
**characterised in that**
the final tightening torque (A) of the power screwdriver is established by a predetermined percentage or fixed value increase of the measured or the calculated maximum screw-in torque (M; R).

10. Use of a component made of a non-homogeneous material with at least one screwed, self-cutting or self-tapping threaded element (1), wherein the threaded element (1) at the respective resting point is tightened using a final tightening torque (A) determined after exceeding a screw-in threshold torque (S) predetermined as the beginning of the screw-in phase.

11. Use according to claim 10, wherein the component comprises a foam material (3) with at least one preformed or pre-drilled hole (3.1) for at least one self-cutting or self-tapping threaded element (1).

12. Use of a component according to claim 10 or claim 11, on the at least one fastening point of which at least one further component is fastened by means of at least one self-cutting or self-tapping threaded element, wherein at least two screw-in points (2.1, 3.1) that are spaced apart from one another are present per fastening point for a threaded element (1).

## Revendications

1. Procédé de vissage d'un élément fileté (1) autotaraudant ou autodécoupant, à visser, ayant une surface d'appui dans un composant (3) en un matériau non homogène, avec une visseuse qui termine l'opération de vissage après la venue en appui de la surface d'appui de l'élément fileté, dont le couple de serrage final (A) est calculé à partir du couple de vissage (M ; R), obtenu dans la phase de vissage avant d'atteindre le point d'appui de la surface d'appui de l'élément fileté,
procédé **caractérisé en ce qu'**
on fixe le début de la phase de vissage (ϕ = 0) par le dépassement d'un seuil de couple de vissage, (S) prédéfini.

2. Procédé selon la revendication 1,
**caractérisé en ce qu'**
on détermine le couple de vissage (M ; R) après avoir atteint un angle de rotation prédéfini (ϕ_{(M)} ; ϕ_{(L)}), de l'élément fileté à partir du début du vissage (ϕ = 0).

3. Procédé selon la revendication 1,
**caractérisé en ce qu'**
on détermine le couple de vissage (M ; R) après avoir atteint une longueur de vissage prédéterminée à partir du début du vissage (ϕ = 0).

4. Procédé selon la revendication 3,
**caractérisé en ce qu'**
on règle la longueur de vissage prédéfinie pour déterminer le couple de vissage (M ; R) par une mesure de distance entre la visseuse et le composant après le début du vissage (ϕ = 0).

5. Procédé selon la revendication 3,
**caractérisé en ce qu'**
on règle la longueur de vissage prédéfinie pour déterminer le couple de vissage (M ; R) par une mesure d'angle de rotation de l'élément fileté après le début du vissage (ϕ = 0) en tenant compte du pas du filetage.

6. Procédé selon l'une des revendications 1 à 5,
**caractérisé en ce qu'**
on calcule un couple de vissage maximum (R) à partir du couple de vissage (M) mesuré pour la longueur de vissage prédéterminée et de la longueur de vissage totale de l'élément fileté.

7. Procédé selon l'une des revendications précédentes,
**caractérisé en ce qu'**
on arrête la phase de vissage et on génère un message de défaut si l'on n'atteint pas le seuil du couple de vissage (S) après un angle de rotation prédéfini ou une longueur de réglage prédéfinie de l'élément fileté.

8. Procédé selon l'une des revendications 1 à 7,
**caractérisé en ce qu'**
- on met en corrélation le couple de serrage maximum (M ; R) calculé ou mesuré avec des valeurs de serrage final prédéfinies, déterminées chaque fois de manière empirique pour différents couples de vissage ou différentes plages de couple de vissage, et
- on règle le couple de serrage final (A) de la visseuse sur la valeur de serrage final correspondante.

9. Procédé selon l'une des revendications 1 à 7,
**caractérisé en ce qu'**
on fixe le couple de serrage final (A) de la visseuse par une augmentation en pourcentage ou une augmentation d'une valeur fixe, prédéfinie, du couple de vissage maximum (M ; R) mesuré ou calculé.

10. Utilisation d'une pièce en un matériau non homogène avec au moins un élément fileté (1) de vissage, autotaraudant ou autodécoupant, selon lequel l'élément fileté (1) est serré au point d'appui respectif avec un couple de serrage final (A) déterminé après un dépassement d'un seuil de couple de serrage (S) prédéfini comme début de la phase de vissage.

11. Application selon la revendication 10, selon laquelle la pièce est réalisée en une mousse (3) ayant au moins un orifice (3.1) préformé ou pré-percé, pour au moins un élément fileté (1) autotaraudant ou autodécoupant.

12. Utilisation d'une pièce selon la revendication 10 ou 11, avec au moins une autre pièce fixée à au moins un point de fixation à l'aide d'au moins un élément fileté autotaraudant ou autodécoupant,
* et par point de fixation, on a au moins deux points de vissage (2.1, 3.1) écartés l'un de l'autre pour un élément fileté (1).
